# EUROPÄISCHE PATENTSCHRIFT

(11) **EP 3 148 825 B1**
(45) Veröffentlichungstag und Bekanntmachung des Hinweises auf die Patenterteilung: **06.06.2018**
(21) Anmeldenummer: 15718173.6
(22) Anmeldetag: 09.04.2015
(51) Int. Cl.: B60G 13/00, B60G 13/08, F16F 9/42, F16F 9/16, F16F 9/32

(54) **SCHWINGUNGSDÄMPFER FÜR EIN FAHRZEUG**
VIBRATION DAMPER FOR A VEHICLE
AMORTISSEUR DE VIBRATIONS POUR VÉHICULE

(30) Priorität: 27.05.2014 DE 102014210096
(43) Veröffentlichungstag der Anmeldung: 05.04.2017
(73) Patentinhaber: Bayerische Motoren Werke Aktiengesellschaft, 80809 München (DE)
(72) Erfinder: DUDKOWIAK, Johann, 82343 Poecking (DE); EIFFLÄNDER, Thomas, 81825 München (DE); GRUBER, Wolfgang, 84028 Landshut (DE); KEIGLER, Michael, 80807 München (DE); KÄSPAIZER, Thomas, 80799 München (DE); SCHOLZ, Hubert, 81543 München (DE); SCHWAB, Martin, 80689 München (DE); STANGL, Matthias, 85221 Dachau (DE); REISER, Andreas, 80634 München (DE)
(86) Internationale Anmeldenummer: PCT/EP2015/057687
(87) Internationale Veröffentlichungsnummer: WO 2015/180881

(56) Entgegenhaltungen:
- EP-A1- 1 512 610
- WO-A1-2014/128131
- DE-A1- 3 213 657
- DE-A1-102011 084 475
- DE-A1-102013 215 236
- FR-A- 1 517 711
- FR-A1- 2 473 961
- FR-A1- 2 696 223
- JP-A- 2010 069 962

## Beschreibung

Vorliegende Erfindung betrifft einen Schwingungsdämpfer für ein Fahrzeug nach dem Oberbegriff des Anspruchs 1 und geht von der FR 2 473 961 A aus.

Die Druckschrift DE 10 318 537 B4 zeigt eine konventionelle Anbindung eines Dämpferzylinders an einen Radträger, welche durch Verschraubungen und Verklemmungen realisiert wird. Die Druckschrift DE 10 2011 084 475 A1 beschreibt ein integrales Schwenklager aus Aluminiumguss. Dabei ist sowohl der im Schwenklager integrierte Dämpfer als auch das Schwenklager selbst aus Aluminiumguss ausgeführt. Die DE 10 2009 029 299 A1 zeigt eine Schwenklager-Anordnung, welche vollständig aus faserverstärktem Kunststoff hergestellt ist. Dabei ist sowohl der Radträger als auch der Dämpfer aus faserverstärktem Kunststoff hergestellt. Die beiden Bauteile sind stoffschlüssig miteinander verbunden. Schließlich zeigt die nächstkommende FR 2 473 961 A eine Hybridbauweise einer Radträgeranordnung mit integriertem Schwingungsdämpfer, wobei ein aus faserverstärktem Kunststoff bestehender Dämpferzylinder zusammen mit einer metallischen Bodenbuchse in eine sacklochartige Ausnehmung in einem metallischen Radträger eingesetzt ist. Nach einer alternativen Ausführungsform dieser Schrift ist in dieser sacklochartigen Ausnehmung, welche auch als Sacklochbohrung bezeichnet werden kann, zwischen dem Dämpferzylinder und der Metallwand dieser Sacklochbohrung ein einstückiges Zwischenelement, welches auch den Boden des Dämpferzylinders bildet, vorgesehen.

Vorliegend wird eine vorteilhafte Weiterbildung einer Schwingungsdämpfer-Anordnung nach dem Oberbegriff des Anspruchs 1 aufgezeigt (=Aufgabe vorliegender Erfindung)
Die Lösung der Aufgabe erfolgt durch die Merkmale des unabhängigen Anspruchs. Die abhängigen Ansprüche haben vorteilhafte Ausgestaltungen der Erfindung zum Gegenstand.

Im Rahmen der Erfindung wurde erkannt, dass eine vollständige Konstruktion eines Radträgers und einer Dämpferrohranordnung aus faserverstärktem Kunststoff zwar sehr leichtbauend ist, jedoch die im Dämpfer entstehende Wärme sehr schlecht abführbar ist. Des Weiteren ist zu beachten, dass die vollständige Konstruktion des Schwingungsdämpfers aus metallischem Werkstoff sehr schwerbauend ist. Auch die konventionelle Verbindung der Dämpferrohre mit dem Radträger über Verschraubungsschnittstellen führt zu zusätzlichem Gewicht und Montageaufwand. Erfindungsgemäß ist deshalb ein Schwingungsdämpfer für ein Fahrzeug vorgesehen, der einen Radträger aus Metall umfasst. Der Radträger dient zur drehbaren Aufnahme des Rades. Dementsprechend ist im oder am Radträger ein Radlager vorgesehen. Des Weiteren umfasst der Schwingungsdämpfer eine Dämpferrohranordnung. Die Dämpferrohranordnung ist zumindest teilweise aus faserverstärktem Kunststoff gefertigt. Die Dämpferrohranordnung stellt ein Dämpferfluidvolumen zur Verfügung, insbesondere wird als Fluid wie üblich ein Öl verwendet. In der Dämpferrohranordnung ist ein Kolben geführt, welcher wie üblich mit einer Kolbenstange verbunden ist und sich in dem Dämpferfluidvolumen bewegt. Die Dämpferrohranordnung ist mit ihrem unteren Ende fest mit dem Radträger verbunden. Die Kolbenstange stellt eine Verbindung zur Karosserie des Fahrzeuges dar. Zusätzlich zum Dämpferfluidvolumen in der Dämpferrohranordnung ist direkt im Radträger ein sog. Radträgerfluidvolumen ausgebildet. Ein bzw. das Fluid, insbesondere das Öl, im Radträgerfluidvolumen steht in Verbindung mit dem Dämpferfluidvolumen, sodass insbesondere durch Bewegung des Kolbens, ein Austausch des Fluides zwischen dem Dämpferfluidvolumen und dem Radträgerfluidvolumen stattfindet. Das Fluid im Radträgerfluidvolumen steht weiterhin in direktem Kontakt mit dem Metall des Radträgers. Dadurch ist eine Wärmeübertragung vom Fluid auf den metallenen Radträger gewährleistet. Durch die zumindest teilweise Ausbildung der Dämpferrohranordnung aus faserverstärktem Kunststoff wird dabei das Leichtbaupotenzial voll ausgeschöpft. Um auch gleichzeitig die im Fluid des Dämpfers entstehende Wärme abzuführen, ist das Radträgerfluidvolumen vorgesehen. Dadurch kann die volle Masse des Radträgers zur Abfuhr der Wärme genutzt werden. Der Radträger ist vorzugsweise als Schwenklager ausgebildet. Das Schwenklager ist bekanntlich ein relativ massiges Bauteil, welches eine Verbindung des Radlagers zur Karosserie des Fahrzeugs darstellt.. Insbesondere dieses massige Bauteil kann gut für die Abfuhr der Wärme aus dem Fluid genutzt werden.

Es ist vorgesehen, dass die Dämpferrohranordnung stirnseitig offen ist, sodass das Dämpferfluidvolumen direkt in das Radträgerfluidvolumen übergeht. Die Stirnseite der Dämpferrohranordnung kann auch als Boden bezeichnet werden. Dieser Boden der Dämpferrohranordnung ist somit offen. Der Boden des Schwingungsdämpfers wird somit durch den metallenen Werkstoff des Radträgers gebildet. Dadurch erfolgt insbesondere eine Wärmeübertragung über den Boden.

Des Weiteren ist bevorzugt vorgesehen, dass das Radträgerfluidvolumen eine Verlängerung der Dämpferrohranordnung darstellt, sodass der Kolben je nach Position durch das Dämpferfluidvolumen oder das Radträgerfluidvolumen bewegt wird. Somit ist nicht nur der Boden, sondern auch ein zylinderförmiger Wandbereich des Schwingungsdämpfers durch den metallenen Werkstoff des Radträgers gebildet, wodurch sich die Oberfläche zur Wärmeübertragung vergrößert.

Des Weiteren ist bevorzugt vorgesehen, dass der Schwingungsdämpfer ein Bodenventil umfasst. Solche ein Bodenventil wird sowohl bei einem Zweirohr-Dämpferprinzip als auch bei einem Einrohr-Dämpferprinzip verwendet. Dieses Bodenventil wird vorzugsweise im Radträgerfluidvolumen, also innerhalb des Radträgers, angeordnet.

Gemäß einer ersten bevorzugten Variante wird ein Zweirohr-Dämpferprinzip angewandt. Demgemäß umfasst die Dämpferrohranordnung ein Außenrohr und ein Innenrohr. Zwischen dem Außenrohr und dem Innenrohr ist ein Ausgleichsfluidvolumen ausgebildet. Über das Bodenventil kann das Fluid aus dem Innenrohr in das Ausgleichsfluidvolumen strömen. Vorteilhafterweise ragt das Innenrohr weiter in den Radträger als das Außenrohr. Im Bereich des Dämpferfluidvolumens ist eine Außenwand des Ausgleichsfluidvolumens durch das Außenrohr gebildet. Im Bereich des Radträgers bildet der metallene Werkstoff des Radträgers selbst die Außenwand des Ausgleichsfluidvolumens.

Gemäß einer zweiten bevorzugten Variante wird ein Einrohr-Dämpferprinzip verwendet. Dementsprechend umfasst die Dämpferrohranordnung nur ein Einzelrohr. Auch bei Verwendung des Einzelrohrs bedarf es eines Ausgleichsfluidvolumens. Auch in dieser Anordnung wird bevorzugt ein Bodenventil verwendet, wobei über das Bodenventil das Fluid in das Ausgleichsfluidvolumen strömen kann. Im Rahmen der Erfindung ist bevorzugt vorgesehen, dass dieses Ausgleichsfluidvolumen im Radträger ausgebildet ist, sodass im Ausgleichsfluidvolumen das Fluid im direkten Kontakt mit dem metallenen Werkstoff des Radträgers steht. Insbesondere gibt es unterhalb des Bodenventils Fluidkanäle, die das Radträgerfluidvolumen mit dem Ausgleichsfluidvolumen verbinden.

Bevorzugt sind im Ausgleichsfluidvolumen Kühlrippen angeordnet, wobei die Kühlrippen integrale Bestandteile des metallenen Radträgers sind. Diese Kühlrippen können sowohl bei dem Einrohr-Dämpferprinzip als auch bei dem Zweirohr-Dämpferprinzip verwendet werden. Die Kühlrippen erhöhen die Flächen zur Wärmeübertragung erheblich.

Des Weiteren ist bevorzugt vorgesehen, dass das Außenrohr bei dem Zweirohr-Dämpferprinzip beziehungsweise das Einzelrohr bei dem Einrohr-Dämpferprinzip mit dem Radträger verklebt ist.

Zur Ausbildung des Radträgerfluidvolumens ist im Radträger eine Sacklochbohrung oder eine entsprechend geformte Tasche ausgebildet. In dieser Tasche oder Bohrung steckt vorzugsweise die Dämpferrohranordnung.

Für die zumindest teilweise Konstruktion der Dämpferrohranordnung aus faserverstärktem Kunststoff sind verschiedene bevorzugte Varianten vorgesehen: So ist vorgesehen, dass das Innenrohr und/oder das Außenrohr und/oder das Einzelrohr entweder vollständig aus faserverstärktem Kunststoff gefertigt sind oder ein Metallrohr oder Kunststoffrohr verwendet wird, das mit einem Faserverbundmaterial umwickelt wird. Das Metall- bzw. Kunststoffrohr dient dabei insbesondere zur Führung des Kolbens und ist so schwach ausgebildet, dass es ohne die Umwicklung mit Faserverbundmaterial nicht dauerfest ist. Insbesondere wird das Metall- oder Kunststoffrohr mit einem faserverstärkten Kunststoff umwickelt.

Bei der Ausführung als Zweirohr-Dämpferprinzip ist es auch möglich, lediglich das Außenrohr zumindest teilweise faserverstärkt auszubilden und für das Innenrohr ein vollständig aus Metall gefertigtes Rohr zu verwenden.

Bei der Verwendung des oben beschriebenen Ausgleichsfluidvolumens ist insbesondere vorgesehen, dass in dem Ausgleichsfluidvolumen ein kompressibles Medium, insbesondere Gas, beispielsweise Luft, angeordnet wird.

Der verwendete Kolben weist eine gewisse Querschnittsfläche auf, die im Wesentlichen der Querschnittsfläche des Innenrohrs bzw. des Einzelrohrs entspricht. Die Ausbildung des Radträgers mit dem Radträgerfluidvolumen und dem vorteilhaften Ausgleichsfluidvolumen innerhalb des Radträgers stellt eine gewisse Wärmeübertragungsfläche dar, an der das Fluid im direkten Kontakt mit dem metallenen Werkstoff des Radträgers steht. Vorteilhafterweise ist vorgesehen, dass die Wärmeübertragungsfläche zumindest 150 Prozent, vorteilhafterweise zumindest 200 Prozent, besonders vorteilhafterweise zumindest 300 Prozent, der definierten Querschnittsfläche des Rohrs entspricht. Dadurch ist eine ausreichende Wärmeübertragungsfläche zur Abfuhr der Wärme aus dem Fluid, insbesondere dem Öl, gegeben.

Weitere Einzelheiten, Merkmale und Vorteile der Erfindung ergeben sich aus der nachfolgenden Beschreibung und den Figuren. Es zeigen:
- Figur 1: einen erfindungsgemäßen Schwingungsdämpfer gemäß einem ersten Ausführungsbeispiel,
- Figur 2: die in Figur 1 gekennzeichnete Schnittansicht A-A,
- Figur 3: einen erfindungsgemäßen Schwingungsdämpfer gemäß einem zweiten Ausführungsbeispiel, und
- Figur 4: einen erfindungsgemäßen Schwingungsdämpfer gemäß einem dritten Ausführungsbeispiel.

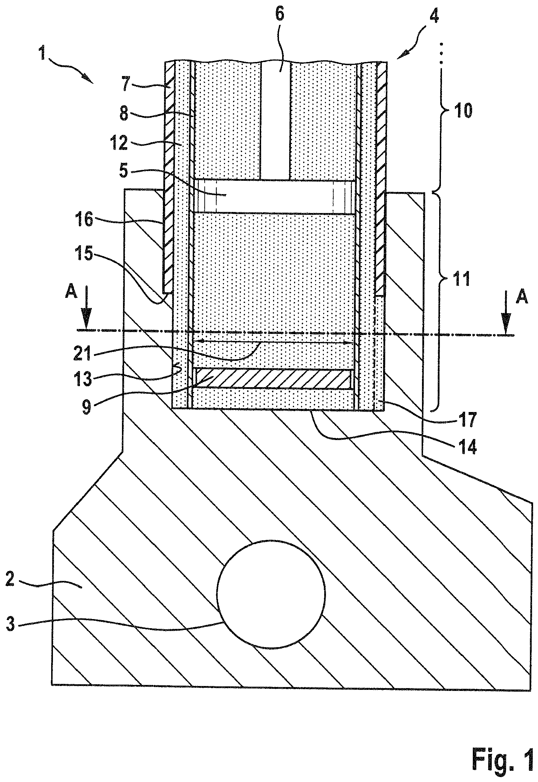

Im Folgenden werden drei Ausführungsbeispiele eines Schwingungsdämpfers 1 anhand der Figuren 1 bis 4 erläutert. Gleiche bzw. funktional gleiche Bauteile sind in allen Ausführungsbeispielen mit denselben Bezugszeichen versehen. Die Darstellungen in den Figuren sind schematisch vereinfacht und zeigen lediglich die erfindungsrelevanten Bauteile.

Der Schwingungsdämpfer 1 gemäß Figur 1 umfasst einen Radträger 2. Der Radträger 2 ist aus Metall, insbesondere Aluminiumdruckguss, gefertigt. Der Radträger 2 dient zur drehbaren Aufnahme eines Rades eines Fahrzeuges, insbesondere Kraftfahrzeuges. So ist im oder am Radträger 2 ein Radlager 3 angeordnet. Der Radträger 2 ist insbesondere als Schwenklager einer Vorderachse ausgebildet.

Der Schwingungsdämpfer 1 umfasst des Weiteren eine Dämpferrohranordnung 4 mit einem Kolben 5. Der Kolben 5 ist mit einer Kolbenstange 6 verbunden. Ein unteres Ende der Dämpferrohranordnung 4 ist fest mit dem Radträger 2 verbunden. Die Kolbenstange 6 wird mit einer Karosserie des Fahrzeugs verbunden.

Im ersten Ausführungsbeispiel ist das sogenannte Zweirohr-Dämpferprinzip gezeigt. Hierzu umfasst die Dämpferrohranordnung 4 ein Außenrohr 7 und ein Innenrohr 8. Der Kolben 5 ist im Innenrohr 8 geführt.

Das Außenrohr 7 ist aus faserverstärktem Kunststoff gefertigt. Das Innenrohr 8 ist aus Metall gefertigt.

Im unteren Bereich des Innenrohrs 8 befindet sich ein Bodenventil 9. Die Dämpferrohranordnung 4 ragt in eine Tasche des Radträgers 2. Dadurch befindet sich das Bodenventil 9 innerhalb des Radträgers 2.

Die Dämpferrohranordnung 4 außerhalb des Radträgers 2 stellt ein Dämpferfluidvolumen 10 dar. Innerhalb des Radträgers 2 geht dieses Dämpferfluidvolumen 10 in ein Radträgerfluidvolumen 11 über. Je nach tatsächlicher Stellung bewegt sich der Kolben 5 im Dämpferfluidvolumen 10 oder im Radträgerfluidvolumen 11. Das Fluid, insbesondere das Öl, im Radträgerfluidvolumen 11 steht im direkten Kontakt mit der metallenen Oberfläche des Radträgers 2, wodurch ein sehr guter Wärmeaustausch stattfindet.

Das Innenrohr 8 ist vom Außenrohr 7 beabstandet, wodurch zwischen dem Innenrohr 8 und dem Außenrohr 7 ein Ausgleichsfluidvolumen 12 entsteht. Das Innenrohr 8 ragt weiter in den Radträger 2 hinein als das Außenrohr 7. Dadurch ist die Außenfläche des Ausgleichsfluidvolumens 12 teilweise durch das Außenrohr 7 und teilweise durch das Material des Radträgers 2 gebildet. Das Ausgleichsfluidvolumen 12 ist teilweise Bestandteil des Dämpferfluidvolumens 10, nämlich außerhalb des Radträgers 2 und teilweise Bestandteil des Radträgerfluidvolumens 11, nämlich innerhalb des Radträgers 2. In diesem Ausführungsbeispiel erfolgt der direkte Kontakt des Fluides mit dem Radträger 2 sowohl über den Boden 14 als auch über die Außenwand 13 des Ausgleichsfluidvolumens 12.

Über das Bodenventil 9 im Radträgerfluidvolumen 11 strömt das Fluid in das Ausgleichsfluidvolumen 12 und aus dem Ausgleichsfluidvolumen 12 heraus. Dies ist notwendig, da beim Bewegen des Kolbens 5 Fluid durch die Kolbenstange 6 verdrängt wird.

Im Radträger 2 ist ein ringförmiger Absatz 15 ausgebildet. An diesem ringförmigen Absatz 15 steht das Außenrohr 7 auf. Des Weiteren ist eine Verklebung 16 zwischen dem Außenrohr 7 und dem Radträger 2 vorgesehen.

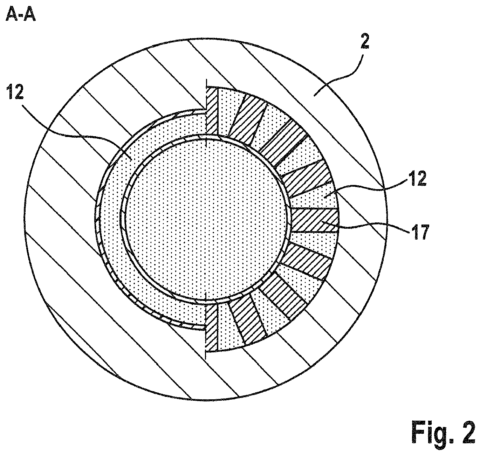

Die rechte Hälfte der Figur 1 zeigt eine Variante zum ersten Ausführungsbeispiel. In dieser Variante sind im Ausgleichsfluidvolumen 12 Kühlrippen 17 vorgesehen. Insbesondere zeigt der Schnitt A-A in Figur 2 die Ausbildung der Kühlrippen 17. Auch in Figur 2 ist die Variante zum ersten Ausführungsbeispiel wiederum in der rechten Hälfte gezeichnet. Die Kühlrippen 17 sind integrale Bestandteile des Radträgers 2 und somit auch aus Metall gefertigt. Durch die Kühlrippen 17 wird die Wärmeübertragungsfläche entschieden erhöht.

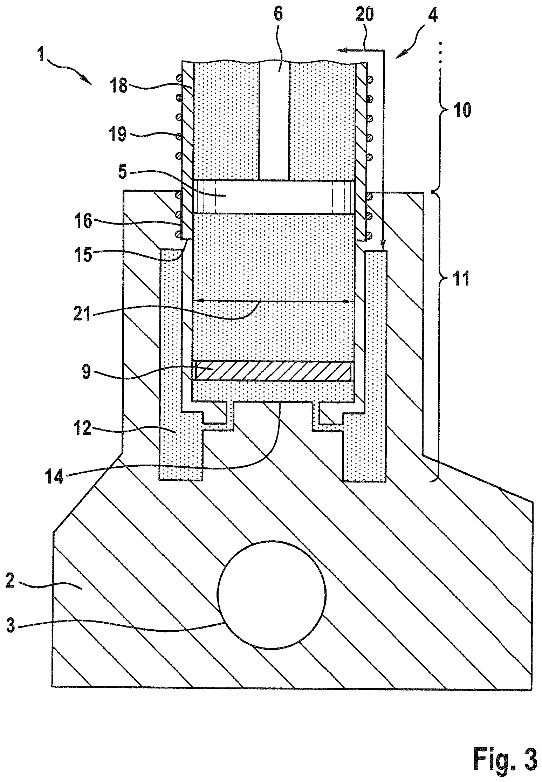

Figur 3 zeigt den Schwingungsdämpfer 1 gemäß dem zweiten Ausführungsbeispiel, ausgebildet nach dem Einrohr-Dämpferprinzip.

Die Dämpferrohranordnung 4 umfasst hier ein Einzelrohr 18. Das Einzelrohr 18 liegt im Radträger 2 auf dem ringförmigen Absatz 15 auf und ist wie ersichtlich mit einer Umwicklung 19 versehen. Das Dämpferfluidvolumen 10 geht wiederum direkt über in das Radträgerfluidvolumen 11, wodurch sich der Kolben 5, je nach Position, im Dämpferfluidvolumen 10 oder im Radträgerfluidvolumen 11 bewegt.

Im Radträgerfluidvolumen 11 steht das Fluid nicht nur am Boden 14, sondern auch an der zylinderförmigen Wandfläche im direkten Kontakt mit dem Metall des Radträgers 2.

Das Ausgleichsfluidvolumen 12 unterhalb und seitlich des (dem Fachmann an Einrohrdämpfern bekannten Trennkolbens 9) ist im zweiten Ausführungsbeispiel durch Ausformung separater Hohlräume im Radträger 2 gebildet. Vorzugsweise ist ein Entlüftungskanal 20 für diesen Hohlraum vorgesehen.

Das Ausgleichsfluidvolumen 12 erstreckt sich im zweiten Ausführungsbeispiel sowohl teilweise unterhalb des Bodens 14 als auch seitlich des Radträgerfluidvolumens 11.

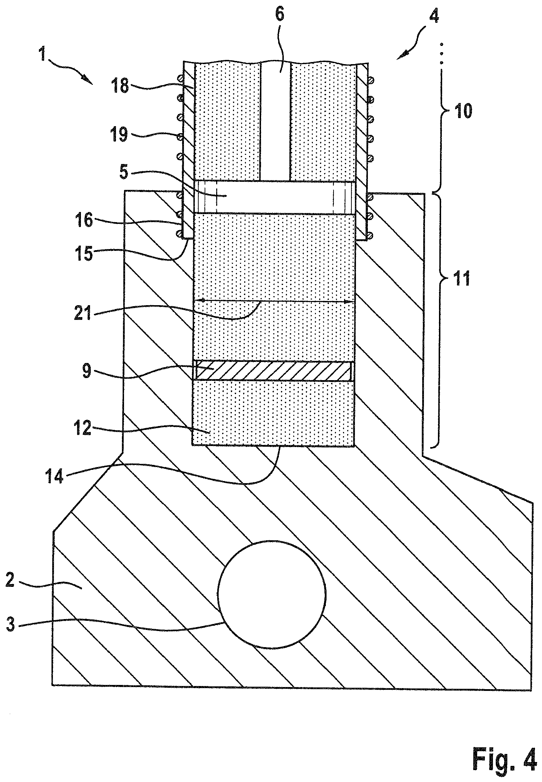

Figur 4 zeigt mit dem dritten Ausführungsbeispiel eine einfachere Ausgestaltung des Ausgleichsfluidvolumens 12. Im dritten Ausführungsbeispiel ist eine Bohrung mit einheitlichem Durchmesser im Radträger 2 vorgesehen. Diese Bohrung wird durch das Bodenventil 9 - bzw. konkret handelt es sich dabei um einen Trennkolben - unterteilt in den Raum, in dem sich der Kolben 5 bewegt und das darunterliegende Ausgleichsfluidvolumen 12.

Im zweiten und dritten Ausführungsbeispiel ist das Innenrohr 18 gebildet durch ein Metallrohr oder Kunststoffrohr, das wiederum durch ein Faserverbundmaterial umwickelt wird (= Umwicklung 19). Jedoch kann auch im zweiten oder dritten Ausführungsbeispiel das Einzelrohr 18 vollständig aus faserverstärktem Kunststoff gefertigt werden.

Genauso ist es im ersten Ausführungsbeispiel vorgesehen, dass Außenrohr 7 nicht aus reinem faserverstärktem Kunststoff zu fertigen, sondern auch hier ein Metall- oder Kunststoffrohr zu verwenden, welches wiederum mit einem Faserverbund umwickelt ist. Auch das Innenrohr 8 gemäß dem ersten Ausführungsbeispiel kann anstatt aus Metall, aus Kunststoff oder faserverstärktem Kunststoff gefertigt werden.

Wie die drei Ausführungsbeispiele zeigen, ist durch die Ausbildung des Radträgerfluidvolumens 11 direkt im Radträger 2 stets eine gewisse Wärmeübertragungsfläche gegeben, bei der das Fluid in direktem Kontakt mit dem metallenen Werkstoff steht. Die Figuren zeigen einen Durchmesser 21 des Kolbens 5. Entsprechend diesem Durchmesser 21 wird eine Querschnittsfläche des Kolbens 5 berechnet. Die Wärmeübertragungsfläche innerhalb des Radträgers 2 entspricht vorteilhafterweise zumindest 150 Prozent dieser Querschnittsfläche.

Zusammenfassend ist festzustellen, dass durch den erfindungsgemäßen Schwingungsdämpfer in Hybridbauweise, nämlich aus Metall und Kunststoff, und den dadurch entstehenden Entfall von Verschraubungsschnittstellen eine sehr leichtbauende Anordnung entsteht. Des Weiteren kann durch den Entfall des Außenrohrs 7 und somit einer Verwendung eines Einrohr-Dämpferprinzips erheblicher Bauraum und Gewicht eingespart werden. Das herkömmliche Problem der Wärmeabfuhr, welches bei Faserverbundbauweise verursacht wird, wird durch die lokale Kühlung innerhalb des Radträgers 2, insbesondere im Bereich des Bodenventils, gelöst. Ein weiterer Vorteil ergibt sich aus den maßgeblichen Kosteneinsparungen durch den Entfall von Vormontageumfängen.

## Patentansprüche

1. Schwingungsdämpfer (1) für ein Fahrzeug, umfassend einen Radträger (2) aus Metall zur drehbaren Aufnahme eines Rades, eine Dämpferrohranordnung (4) zumindest teilweise aus faserverstärktem Kunststoff zur Ausbildung eines Dämpferfluidvolumens (10), einen in der Dämpferrohranordnung (4) geführten Kolben (5) mit einer mit einer Karosserie des Fahrzeugs verbindbaren Kolbenstange (6),
wobei die Dämpferrohranordnung (4) fest mit dem Radträger (2) verbunden ist, indem im Radträger (2) eine Tasche oder Sacklochbohrung ausgebildet ist, in welche die Dämpferrohranordnung (4) eingesteckt ist,
**dadurch gekennzeichnet, dass** die Dämpferrohranordnung stirnseitig offen ist, so dass das Dämpferfluidvolumen (10) direkt in ein im Radträger (2) ausgebildetes Radträgerfluidvolumen (11) übergeht, welches seinerseits zur Wärmeübertragung im direkten Kontakt mit dem Metall des Radträgers (2) steht.

2. Schwingungsdämpfer nach Anspruch 1, **dadurch gekennzeichnet, dass** das Radträgerfluidvolumen (11) eine Verlängerung der Dämpferrohranordnung (4) darstellt, sodass der Kolben (5) je nach Position durch das Dämpferfluidvolumen (10) oder das Radträgerfluidvolumen (11) bewegt wird.

3. Schwingungsdämpfer nach einem der vorhergehenden Ansprüche, **dadurch gekennzeichnet, dass** zumindest ein Rohr (7, 18) der Dämpferrohranordnung (4) kürzer ist als ein maximaler Dämpferweg des Kolbens (5).

4. Schwingungsdämpfer nach einem der vorhergehenden Ansprüche, **gekennzeichnet durch** ein Bodenventil (9), das im Radträgerfluidvolumen (11) angeordnet ist.

5. Schwingungsdämpfer nach einem der vorhergehenden Ansprüche, **dadurch gekennzeichnet, dass** die Dämpferrohranordnung (4) ein Außenrohr (7) und ein Innenrohr (8) umfasst, wobei zwischen dem Außenrohr (7) und dem Innenrohr (8) ein Ausgleichsfluidvolumen (12) ausgebildet ist, und wobei sich das Innenrohr (8) weiter in den Radträger (2) erstreckt als das Außenrohr (7), sodass eine Außenwand (13) des Ausgleichsfluidvolumens (12) teilweise durch den Radträger (2) gebildet ist.

6. Schwingungsdämpfer nach einem der Ansprüche 1 bis 4, **dadurch gekennzeichnet, dass** die Dämpferrohranordnung (4) nur ein Einzelrohr (18) umfasst und im Radträger (2) zumindest ein Ausgleichsfluidvolumen (12) ausgebildet ist, in dem das Fluid zur Wärmeübertragung im direkten Kontakt mit dem Metall des Radträgers (2) steht.

7. Schwingungsdämpfer nach einem der Ansprüche 5 oder 6, **dadurch gekennzeichnet, dass** im Ausgleichsfluidvolumen (12) Kühlrippen (17) angeordnet sind, wobei die Kühlrippen (17) integrale Bestandteile des Radträgers (2) sind.

8. Schwingungsdämpfer nach einem der Ansprüche 5 bis 7, **dadurch gekennzeichnet, dass** das Außenrohr (7) oder das Einzelrohr (18) mit dem Radträger (2) verklebt ist.

9. Schwingungsdämpfer nach einem der Ansprüche 5 bis 8, **dadurch gekennzeichnet, dass** das Innenrohr und/oder das Außenrohr und/oder das Einzelrohr entweder vollständig aus faserverstärktem Kunststoff gefertigt ist oder ein mit Faserverbundmaterial umwickeltes Metallrohr ist oder ein mit Faserverbundmaterial umwickeltes Kunststoffrohr ist.

## Claims

1. A vibration damper (1) for a vehicle, comprising a wheel carrier (2) made of metal for rotatably receiving a wheel, a damper tube arrangement (4) made at least in part of fibre-reinforced plastic for forming a damper fluid volume (10), a piston (5), which is guided in the damper tube arrangement (4) and which has a piston rod (6) connectable to a body of the vehicle,
wherein the damper tube arrangement (4) is fixedly connected to the wheel carrier (2) in that a pocket or blind bore is formed in the wheel carrier (2) and the damper tube arrangement (4) is inserted into said pocket or bore,
**characterised in that** the damper tube arrangement is open on the end face so that the damper fluid volume (10) transitions directly into a wheel carrier fluid volume (11) which is formed in the wheel carrier (2) and which is in turn in direct contact with the metal of the wheel carrier (2) for heat transfer.

2. A vibration damper according to claim 1, **characterised in that** the wheel carrier fluid volume (11) constitutes an extension of the damper tube arrangement (4), such that the piston (5) is moved depending on position by the damper fluid volume (10) or the wheel carrier fluid volume (11).

3. A vibration damper according to any one of the preceding claims,
**characterised in that** at least one tube (7, 18) of the damper tube arrangement (4) is shorter than a maximum damper path of the piston (5).

4. A vibration damper according to any one of the preceding claims,
**characterised by** a base valve (9) arranged in the wheel carrier fluid volume (11).

5. A vibration damper according to any one of the preceding claims,
**characterised in that** the damper tube arrangement (4) comprises an outer tube (7) and an inner tube (8), wherein a compensation fluid volume (12) is formed between the outer tube (7) and the inner tube (8), and wherein the inner tube (8) extends further into the wheel carrier (2) than the outer tube (7), such that an outer wall (13) of the compensation fluid volume (12) is formed in part by the wheel carrier (2).

6. A vibration damper according to any one of claims 1 to 4,
**characterised in that** the damper tube arrangement (4) comprises only an individual tube (18) and in the wheel carrier (2) there is formed at least one compensation fluid volume (12), in which the fluid for heat transfer is in direct contact with the metal of the wheel carrier (2).

7. A vibration damper according to any one of claims 5 or 6,
**characterised in that** cooling ribs (17) are arranged in the compensation fluid volume (12), wherein the cooling ribs (17) are integral parts of the wheel carrier (2).

8. A vibration damper according to any one of claims 5 to 7,
**characterised in that** the outer tube (7) or the individual tube (18) is bonded to the wheel carrier (2).

9. A vibration damper according to any one of claims 5 to 8,
**characterised in that** the inner tube and/or the outer tube and/or the individual tube are/is manufactured fully from fibre-reinforced plastic, or are/is a metal tube around which fibre composite material is wound, or are/is a plastic tube around which fibre composite material is wound.

## Revendications

1. Amortisseur d'oscillations (1) destiné à un véhicule comprenant un support de roue (2) réalisé en métal permettant la réception mobile en rotation d'une roue, un dispositif d'amortissement tubulaire (4) au moins partiellement réalisé en un matériau synthétique renforcé par des fibres pour permettre de former un volume de fluide d'amortissement (10), un piston (5) guidé dans le dispositif d'amortissement tubulaire (4) et équipé d'une tige de piston (6) pouvant être reliée à la carrosserie du véhicule,
le dispositif d'amortissement tubulaire (4) étant relié solidairement au support de roue (2) en formant dans celui-ci une poche ou un perçage borgne dans lequel est enfiché le dispositif d'amortissement tubulaire (4),
**caractérisé en ce que**
le dispositif d'amortissement tubulaire est ouvert côté frontal de sorte que le volume de fluide d'amortissement (10) se prolonge directement par un volume de fluide de support de roue (11) formé dans le support de roue (2), qui est de son côté en contact direct avec le métal du support de roue (2) pour permettre un transfert de chaleur.

2. Amortisseur d'oscillations conforme à la revendication 1,
**caractérisé en ce que**
le volume de fluide du support de roue (11) constitue un prolongement du dispositif d'amortissement tubulaire (4) de sorte que, selon sa position, le piston (5) soit déplacé par le volume de fluide d'amortissement (10) ou par le volume de fluide du support de roue (11).

3. Amortisseur d'oscillations conforme à l'une des revendications précédentes,
**caractérisé en ce qu'**
au moins un tube (7, 18) du dispositif d'amortissement tubulaire (4) est plus court que la course d'amortissement maximum du piston (5).

4. Amortisseur d'oscillations conforme à l'une des revendications précédentes,
**caractérisé par**
une soupape de base (9) qui est montée dans le volume de fluide du support de roue (11).

5. Amortisseur d'oscillations conforme à l'une des revendications précédentes,
**caractérisé en ce que**
le dispositif d'amortissement tubulaire (4) comporte un tube externe (7) et un tube interne (8), et, entre le tube externe (7) et le tube interne (8) est formé un volume de fluide d'équilibrage (12), et, le tube interne (8) s'étend plus profondément dans le support de roue (2) que le tube externe (7) de sorte que la paroi externe (13) du volume de fluide d'équilibrage (12) soit formée en partie par le support de roue (2).

6. Amortisseur d'oscillations conforme à l'une des revendications 1 à 4,
**caractérisé en ce que**
le dispositif d'amortissement tubulaire (4) ne comporte qu'un seul tube (18), et dans le support de roue (2) est formé au moins un volume de fluide d'équilibrage (12) dans lequel le fluide est en contact direct avec le métal du support de roue (2) pour permettre un transfert de chaleur.

7. Amortisseur d'oscillations conforme à l'une des revendications 5 et 6,
**caractérisé en ce que**
dans le volume de fluide d'équilibrage (12) sont positionnées des nervures de refroidissement (17), faisant partie intégrante du support de roue (2).

8. Amortisseur d'oscillations conforme à l'une des revendications 5 à 7,
**caractérisé en ce que**
le tube externe (7) ou le tube unique (18) est collé sur le support de roue (2).

9. Amortisseur d'oscillations conforme à l'une des revendications 5 à 8,
**caractérisé en ce que**
le tube interne et/ou le tube externe et/ou le tube unique est(sont) réalisé(s) totalement en un matériau synthétique renforcé par des fibres ou est(sont) un tube métallique enveloppé par un matériau composite renforcé par des fibres ou est(sont) un tube en matériau synthétique enveloppé par un matériau composite renforcé par des fibres.
